# EUROPEAN PATENT SPECIFICATION

(11) **EP 3 945 777 B1**
(45) Date of publication and mention of the grant of the patent: **30.11.2022**
(21) Application number: 19820740.9
(22) Date of filing: 11.12.2019
(51) Int. Cl.: A01G 3/02, A01G 3/025

(54) **LOPPER HAVING IMPROVED CUTTING PERFORMANCE**
BAUMSCHERE MIT VERBESSERTEM SCHNEIDVERHALTEN
ÉBRANCHEUR AYANT UNE PERFORMANCE DE COUPE AMÉLIORÉE

(30) Priority: 04.04.2019 DE 102019002457
(43) Date of publication of application: 09.02.2022
(73) Proprietor: HUSQVARNA AB, 561 82 Huskvarna (SE)
(72) Inventor: WANNENWETSCH, Christian, 89182 Bernstadt (DE); SIMON, Tobias, 87782 Unteregg (DE)
(74) Representative: Finkele, Rolf
(86) International application number: PCT/EP2019/084642
(87) International publication number: WO 2020/200503

(56) References cited:
- GB-A- 605 038
- US-A- 1 520 529
- US-A- 2 557 506
- US-A- 4 644 652
- US-A- 4 809 433
- US-A- 5 625 952
- US-A1- 2003 101 596
- US-A1- 2007 044 316
- US-A1- 2008 276 464
- US-A1- 2012 279 072
- US-A1- 2017 055 458

## Description

### TECHNICAL FIELD

The present disclosure relates to cutting tools. More specifically, the present disclosure relates to a lopper which provides improved cutting performance by optimal placement of multiple cutting edges.

### BACKGROUND

Cutting tools such as loppers are used for performing cutting action using one or more cutting edges provided on blades of the cutting tools. Put simply, such tools provide increased reach and ease of operation to a common user to conveniently perform operations such as cutting off branches at different elevations or branches of varying dimensions. Trapping bypass cutting or simply "bypass" cutting allows pruning/cutting by the cutting tools while holding an object (*i.e.,* branch) with one of the cutting edges. However, such type of cutting operations generally require a very large cutting angle, even in case of smaller branches, making it less appealing for users.

Moreover, working of the cutting tools, particularly for "bypass" cutting, leads to closing of blades from front to back. This generally leads to substantial loss of effort to engage the object with cutting edge(s), which are usually provided around mid-section of the blade. Further, the front of the blades is generally blunt (*i.e.,* non-grinded or stated differently, unsharpened leaving the front of the blades out of any substantial cutting action. There are also concerns regarding cutting of the blades into each other, particularly for arrangements with both blades in grinded (or simply sharp) condition.

There may be instances where working with the cutting tools may require presence of the multiple cutting edges corresponding to and capable of engaging with branches of different dimensions, or from any other application or user preference. However, mere presence of multiple cutting edges around mid-section of the blade may still lead to an undesirable operation due to loss of user effort during cutting. From implementation benefits, there needs to be smaller cutting angles between the cutting edges of the cutting tool for trapping and cutting smaller branches which is not fully addressed by relative position of the multiple cutting edges of conventional cutting tools.

Thus, there is a need for an improved cutting performance, preferably from optimum placement of multiple cutting edges, by cutting tools such as loppers. Further, it would be an added benefit if the cutting tools would require less grinding as compared to conventional cutting tools.

US 2008/276464 A1 discloses a cutting tool of the related art, comprising the features of the preamble of the independent claims.

### SUMMARY

In view of the above, it is an objective of the present invention to solve or at least reduce the drawbacks discussed above. The objective is at least partially achieved by a cutting tool according to one of independent claims 1 and 2.

According to an embodiment of the present invention, the first lever extends distally away from a pivot point to define a first handle, where the pivot point pivotably couples the second blade to the first blade. According to an embodiment of the present invention, the second lever extends distally away from the pivot point to define a second handle.

According to an embodiment of the present invention, the first handle is enclosed, at least partly, with a first hand-grip extending circumferentially about the first handle. According to an embodiment of the present invention, the second handle is enclosed, at least partly, with a second hand-grip extending circumferentially about the second handle. Role of hand grips i.e. the first hand-grip and the second hand-grip is to provide protection to a user of the cutting tools from shocks, damage etc.

According to an embodiment of the present invention, the first lever and the second lever are made of aluminum. Choice of the material for any of the first lever and the second lever depends upon implementation and user specific factors.

According to an embodiment of the present invention, the cutting tool is one of: loppers and secateurs. The present disclosure may be implemented for any cutting tool including two or more levers such as lopper, pruner, secateur and the like.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 shows a first side view of a cutting tool with a first blade having a front and rear cutting edge;
FIG. 2 shows a second side view of the cutting tool with a second blade having a structural feature, in accordance with an embodiment of the present invention;
FIG. 3 shows an enlarged first side view of the cutting tool from FIG. 1, in accordance with an embodiment of the present invention;
FIG. 4 shows a sectioned view of the cutting tool taken along sectional line AA' of FIG. 3, in accordance with an embodiment of the present invention;
FIG. 5 shows a cutting tool from the state of the art, the so called trapping lopper; and
FIG. 6 shows a first side view of the first lever of the cutting tool of another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

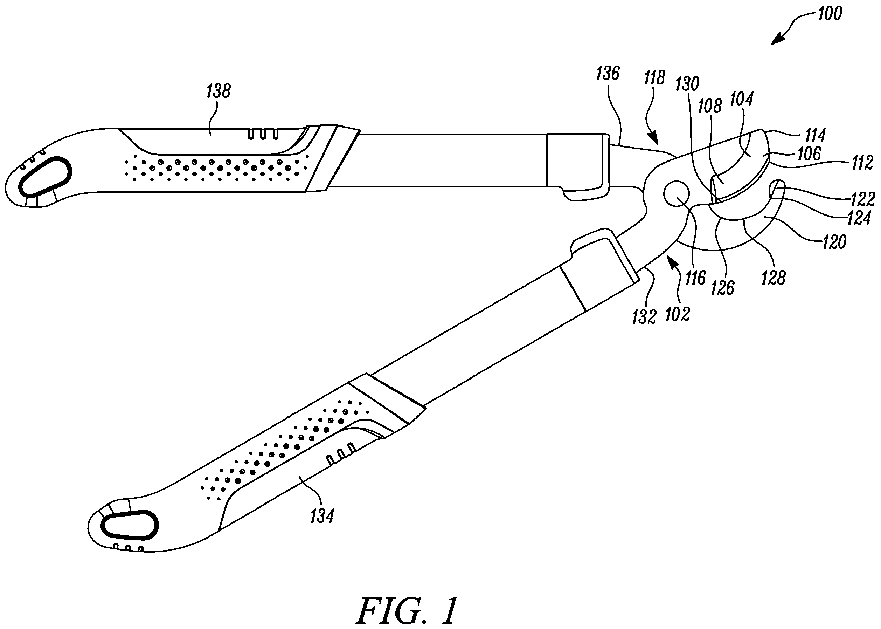

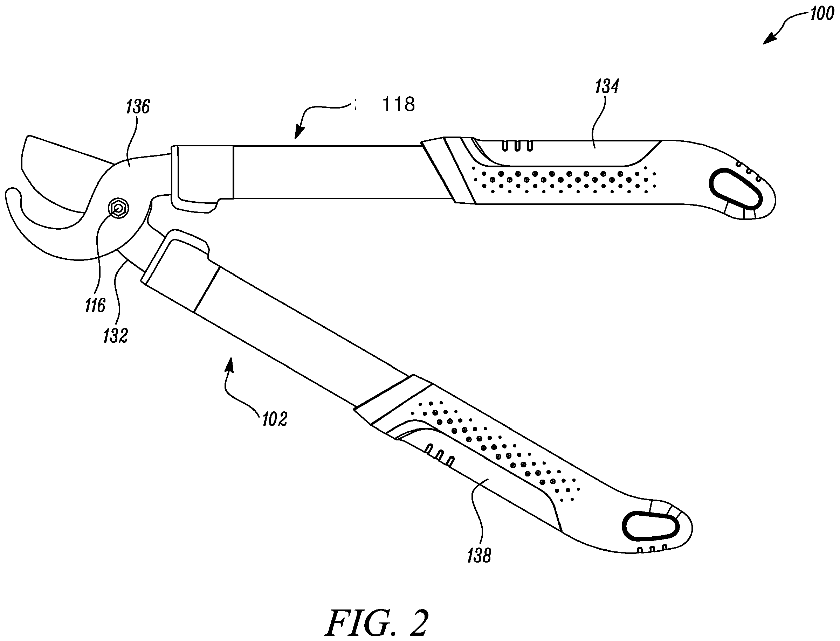

**FIGS. 1** and **2** illustrate a cutting tool **100.** The cutting tool **100** is illustrated as loppers although the present disclosure can be readily implemented with any cutting tool such as, but not limited to, pruners, shears, secateurs or any other cutting tool. The cutting tool **100** includes a first lever **102.** The first lever **102** includes a first front section **106** and a first rear section **108** that are angularly spaced apart from one another. The cutting tool **100** includes a first blade **104** which defines the first front section **106** and the first rear section **108.** Further, the first rear section **108** defines a rear cutting edge **130.** The cutting tool **100** includes a second blade **120** pivotally coupled, around a pivot point **116,** to the first blade **104** proximal to the first rear section **108.** The second blade **120** defines a second front section **122** and a second rear section **126.** The first blade **104** is defined on a first lever **102** and the second blade **120** is defined on a second lever **118.** Provision of the first lever **102** and the second lever **118** allows ease of handling and safety during application of the cutting tool **100.** The cutting tool **100** of the present disclosure has at least one of the first blade **104** and the second blade **120** defining at least one structural feature **124.** The at least one structural feature **124** is adapted to keep the first blade **104** and the second blade **120** in a bypass configuration relative to each other. However, multiple number of such structural feature **124** are possible and such variations are also well within the scope of the present disclosure. The cutting tool **100** is characterized in that the first front section **106** defines a front cutting edge **114.**

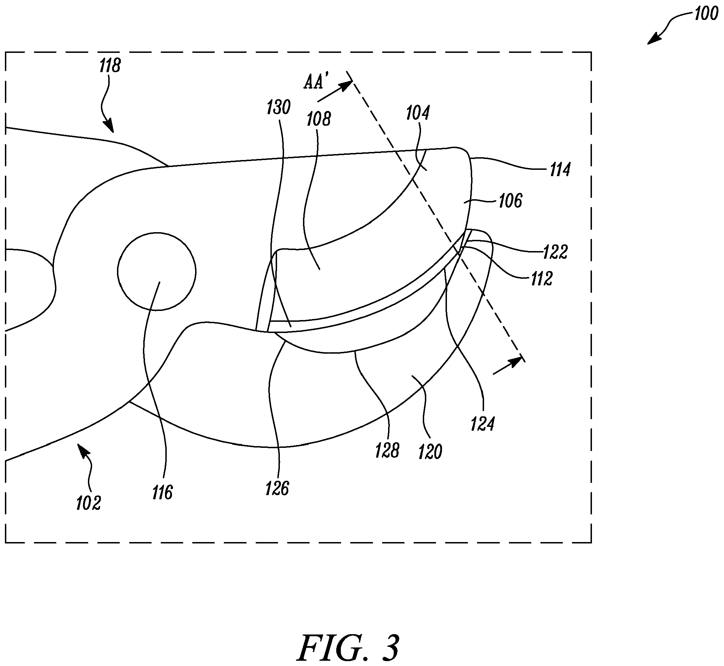

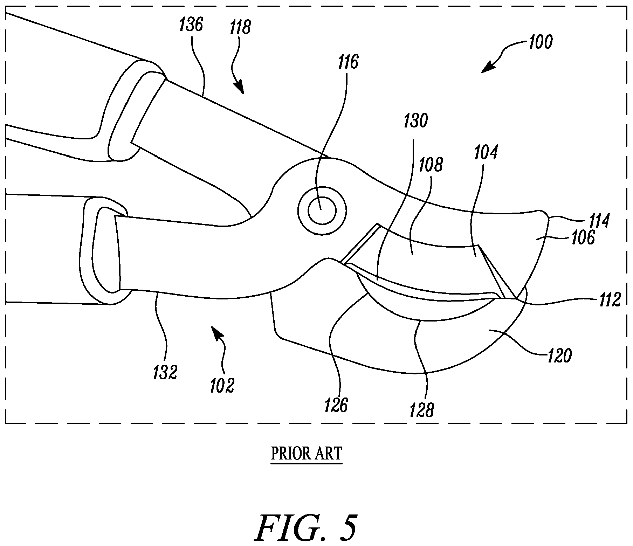

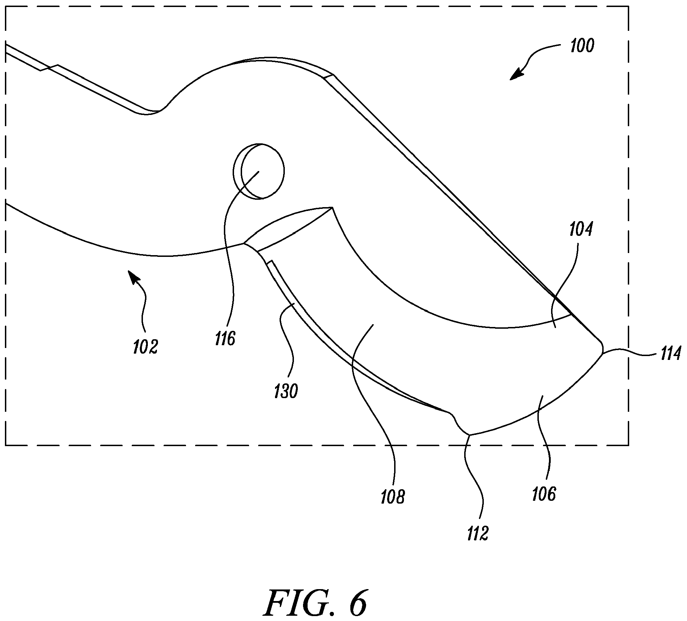

As used herein, "bypass configuration" of the present disclosure leads to a pre-fixed distance between the first blade **104** and the second blade **120** as per application requirement or user safety among other considerations. The present disclosure has provision of the structural feature **124** which is illustrated as a slanted portion **124** on the second blade **120** (refer **FIGS. 1****,** **3****)** or an intermediate portion **112** on the first blade **104** (refer **FIGS. 5****,** **6****).** Although, other shapes or placements or dimensions or profiles of the structural feature **124** have also been contemplated and are well within the scope of the present disclosure. The present disclosure aims to provides a simple, convenient, and economical cutting tool **100** which provides better cutting performance even with less effort and grinding requirements, while protecting any undue blunting of cutting edges (i.e. the rear cutting edge **130).**

As illustrated in **FIGS. 1** and **2****,** the cutting tool **100** of the present disclosure has the at least one structural feature **124** as the slanted portion on the second blade **120.** In an embodiment, the slanted portion **124** extends from the second blade **120** towards the first blade **104.** Moreover, the slanted portion **124** is disposed on the second front section **122** from implementation consideration, however it may be placed anywhere on the second blade **120.**

The second lever **118,** as illustrated in various embodiments of the present disclosure, is coupled to the first lever **102** at the pivot point **116** located distally away from the first front section **106** of the first lever **102.** However, there may be multiple pivot points and links as used or known in the art and all such variations are well within the scope of the present disclosure. As shown best in the view of **FIG. 2****,** the second lever **118** includes the second front section **122** that co-operatively corresponds with the first front section **106** of the first lever **102.** The second front section **122** of the second lever **118** defines the structural feature **124.**

The present disclosure illustrates the rear cutting edge **130** extending between an intermediate section **112** of the first blade **104** and the pivot point **116,** however, the rear cutting edge **130** may be extended even beyond the pivot point **116** as would be required for some demanding applications. The present disclosure is not to be limited by extent of the rear cutting edge **130** in any manner. Moreover, the relative dimensions of the rear cutting edge **130** and the structural feature **124** will be generally decided by user or application requirements. This may even allow cutting of multiple branches simultaneously while utilizing the combination of the rear cutting edge **130** and the structural feature **124.**

In an embodiment, the second blade **120** includes the second rear section **126** angularly spaced apart from the second front section **122** of the second lever **118** with a blunt profile **128** defined therebetween. As will be evident to a person having knowledge in the art, the spacing between rear and front section of the second blade **120** does not necessarily be angularly spaced but as well could exhibit a sliding or slipping transit zone. Moreover, in an embodiment, the first rear section **108** of the first lever **102** defines the rear cutting edge **130** that co-operatively corresponds with the second rear section **126** (and the blunt profile **128)** of the second lever **118.**

As used herein, the rear cutting edge **130** shall mean a cutting edge provided almost in proximity and on same lever (in this case - the first lever **102)** as the front cutting edge **114.** The rear cutting edge **130** may be obtained by grinding around the first rear section **108** of the lever *i.e.,* the first lever **102** to convert any conventional cutting tool **100** into the cutting tool **100** of the present disclosure.

Moreover, in an embodiment, the second rear section **126** of the second lever **118** may have the blunt profile **128** *i.e.,* an unsharpened profile. However, it will be acknowledged by persons skilled in the art that a profile of the second rear section **126** of the second lever **118** may be selected *i.e.,* sharpened or unsharpened to best meet specific demands of an application.

In an embodiment, the first lever **102** extends distally away from the pivot point **116** to define a first handle **132** opposite the first front section **106** of the first lever **102.** In an embodiment, the second lever **118** extends distally away from the pivot point **116** to define a second handle **136** opposite the first surface **120** of the second lever **118.** Moreover, in an embodiment, the first handle **132** is enclosed, at least partly, with a first hand-grip **134** extending circumferentially about the first handle **132.** In an embodiment, the second handle **136** is enclosed, at least partly, with a second hand-grip **138** extending circumferentially about the second handle **136.** Role of the hand-grips **134, 138** is important from ergonomic and safety considerations such as to provide protection to a user of the cutting tool **100** from shocks, damage etc.

In an embodiment, the structural feature **124,** and the blunt profile **128** of the second lever **118** co-operatively maintain a fixed distance between the first front section, second front section **106, 122** and the first rear section, second rear section **108, 126** from corresponding ones of the first lever **102** and the second lever **118.** This allows protection of the front cutting edge **114** and the rear cutting edge **130** from any damage or blunting due to contact with the second lever **118.** This can provide benefits such as protection of the front cutting edge, structural feature and rear cutting edge **114, 124** and **130** from undesired interaction which can otherwise lead to loss of sharpness of the front cutting edge, structural feature and rear cutting edge **114, 124** and **130.**

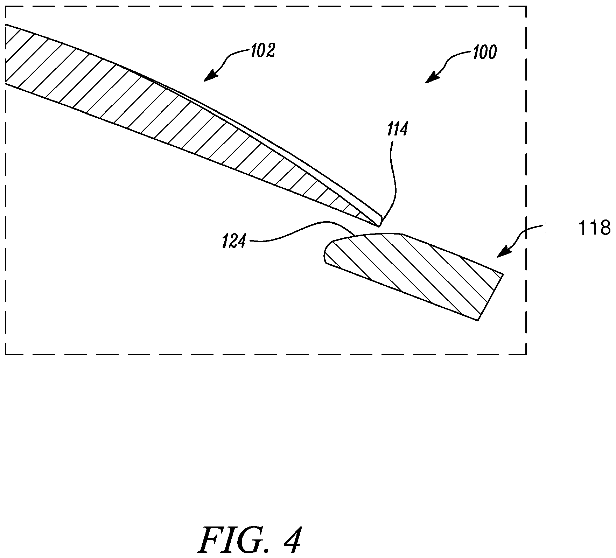

Referring to **FIG. 3** and as best shown in the view of **FIG. 4****,** the structural feature **124** is in tandem with the front cutting edge **114.** Thus, the present disclosure deters blunting by protection of the front cutting edge **114** and the structural feature **124.** Although one configuration of inter-relative positioning and angular arrangement is shown for the front cutting edge, structural feature **114, 124,** in alternative embodiments, other relative positions or angles (such as, but not limited to embodiments of **FIGS. 5****,** **6****)** between the front cutting edge **114** and the structural feature **124** have been contemplated and are well within the scope of the present disclosure.

The blunt profile **128,** in accordance with an implementation of the present disclosure, fixes the distance between the first lever **102** and the second lever **118.** Sizes or shapes or locations of the blunt profile **128** as shown in the present disclosure is for exemplary purposes only. A person having knowledge in the art will appreciate that the sizes or shapes or locations of the blunt profile **128** shall be decided based upon pruning requirements which usually depend upon size or type of objects (say branches) to be cut by the cutting tool **100.**

In an embodiment, the first lever **102** and the second lever **118** can be made of aluminum or any other material as used or known in the art. Preferably, care may be taken to utilize a harder material for the first lever **102** as compared to the material used for the second lever **118** in order to minimize undesired shaving or machining of any part of the first lever **102** such as the front cutting edge **114,** or the rear cutting edge **130.** Choice of the material for any of the first lever **102** and the second lever **118** will generally depend upon factors such as life, application, weight or other parameters related to the cutting tool **100.** However, the present disclosure is not to be limited by the type of material of the first lever **102** and the second lever **118** in any manner.

The cutting tool with **FIG. 5** forms state of the art and shows the front section of a so called by trapping lopper. It is known that a structural feature on the top blade **104** ensures that this blade **104** is bypassing the bottom blade **120.** With the front section **106** of blade **104** is not grinded.

Another embodiment of the invention is best shown in the view of **FIG. 6****,** the cutting tool **100** has the structural feature **124** defined as the intermediate section **112** on the first blade **104** of the first lever 102. As illustrated, the intermediate section **112** is defined on the first blade **104** between the first rear section **108** and the first front section **106.** Specifically, the intermediate portion **112** of the first lever **102** extends or angles away from the first lever **102.** Additionally, or optionally, the blunt profile **128** of the second lever **118** may extend away from the second lever **118.** This way, during a cutting action of the cutting tool **100,** the intermediate portion **112** of the first lever **102** contacts the second front section **122** of the second lever **118** before the front cutting edge **114** and/or the third cutting edge **130** contacts any part of the second lever **118.**

As illustrated, the second lever **118** has the blunt profile **128** between the second front section **122** and the second rear section **126** facing the rear cutting edge **130.** Thus, only one of the levers (like the first lever 102 of the present disclosure) needs to be sharpened or grinded while the second lever **118** can remain blunt providing time and wherewithal benefits.

**FIG. 6** shows the first lever 102 of the cutting tool from **FIG. 5****,** in accordance with another embodiment of the present invention. The intermediate section **112** defined on the first blade **104** keeps distance between the first lever **102** and the second lever **118** fixed. This can provide benefits such as protection of the rear cutting edge **130** from undesired interaction with the second lever **118** which can otherwise lead to loss of sharpness, and various other application benefits.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **102**: First Lever
- **104**: First Blade
- **106**: First Front Section
- **108**: First Rear Section
- **112**: Intermediate Section
- **114**: Front Cutting Edge
- **116**: Pivot Point
- **118**: Second Lever
- **120**: Second Blade
- **122**: Second Front Section
- **124**: Structural Feature/Slanted Portion
- **126**: Second Rear Section
- **128**: Blunt Profile
- **130**: Rear Cutting Edge
- **132**: First Handle
- **134**: First Hand-Grip
- **136**: Second Handle
- **138**: Second Hand-Grip

## Claims

1. A cutting tool (100) comprising:
a first blade (104) defining a first front section (106) and a first rear section (108), wherein the first front section (106) defines a front cutting edge (114) and the first rear section (108) defines a rear cutting edge (130);
a second blade (120) pivotally coupled to the first blade (104) proximal to the first rear section (108), wherein the second blade (120) defines a second front section (122) and a second rear section (126); and
the second blade (120) defines a structural feature (124) that allows the first blade (104) and the second blade (120) in a bypass configuration relative to each other;
wherein the second blade (120) has a blunt profile (128) between the second front section (122) and the second rear section (126) facing the rear cutting edge (130);
wherein the at least one structural feature (124) is a slanted portion (124) on the second blade (120) and the slanted portion (124) extends from the second blade (120) towards the first blade (104), the slanted portion (124) disposed on the second front section (122),
wherein the first blade (104) is defined on a first lever (102) and the second blade (120) is defined on a second lever (118);
**characterized in that:**
the structural feature (124) and the blunt profile (128) of the second lever (118) are configured to co-operatively maintain a fixed distance between the first front section, second front section (106), (122) and the first rear section, second rear section (108), (126) from corresponding ones of the first lever (102) and the second lever (118) such that the front cutting edge (114) and the rear cutting edge (130) do not contact with the second lever (118).

2. A cutting tool (100) comprising:
a first blade (104) defining a first front section (106) and a first rear section (108),
wherein the first front section (106) defines a front cutting edge (114) and the first rear section (108) defines a rear cutting edge (130);
a second blade (120) pivotally coupled to the first blade (104) proximal to the first rear section (108),
wherein the second blade (120) defines a second front section (122) and a second rear section (126); and
the first blade (104) defines a structural feature (124) that allows the first blade (104) and the second blade (120) in a bypass configuration relative to each other;
wherein the second blade (120) has a blunt profile (128) between the second front section (122) and the second rear section (126) facing the rear cutting edge (130);
wherein the first blade (104) is defined on a first lever (102) and the second blade (120) is defined on a second lever (118);
**characterized in that**:
the structural feature (124) is an intermediate section (112) defined on the first blade (104) between the first rear section (108) and the first front section (106);
wherein the intermediate section (112) defined on the first blade (104) is configured to allow a fixed distance between the first lever (102) and the second lever (118).

3. The cutting tool (100) of claim 1 or 2, wherein the first lever (102) extends distally away from a pivot point (116) to define a first handle (132), where the pivot point (116) pivotably couples the second blade (120) to the first blade (104).

4. The cutting tool (100) of claim 3, wherein the second lever (118) extends distally away from the pivot point (116) to define a second handle (136).

5. The cutting tool (100) of claim 3, wherein the first handle (132) is enclosed, at least partly, with a first hand-grip (134) extending circumferentially about the first handle (132).

6. The cutting tool (100) according to claim 4, wherein the second handle (136) is enclosed, at least partly, with a second hand-grip (138) extending circumferentially about the second handle (136).

7. The cutting tool (100) of anv of the preceding claims, wherein the first lever (102) and the second lever (118) are made of aluminum.

8. The cutting tool (100) of any of the preceding claims, wherein the cutting tool (100) is one of: loppers and secateurs.

## Patentansprüche

1. Ein Schneidwerkzeug (100), das Folgendes umfasst:
eine erste Klinge (104), die einen ersten vorderen Abschnitt (106) und einen ersten hinteren Abschnitt (108) definiert, wobei der erste vordere Abschnitt (106) eine vordere Schneidkante (114) definiert und der erste hintere Abschnitt (108) eine hintere Schneidkante (130) definiert;
eine zweite Klinge (120), die schwenkbar mit der ersten Klinge (104) in der Nähe des ersten hinteren Abschnitts (108) verbunden ist, wobei die zweite Klinge (120) einen zweiten vorderen Abschnitt (122) und einen zweiten hinteren Abschnitt (126) definiert; und
die zweite Klinge (120) ein strukturelles Merkmal (124) definiert, das die erste Klinge (104) und die zweite Klinge (120) in einer Bypass-Konfiguration relativ zueinander ermöglicht; wobei die zweite Klinge (120) ein stumpfes Profil (128) zwischen dem zweiten vorderen Abschnitt (122) und dem zweiten hinteren Abschnitt (126), der
der hinteren Schneidkante (130) zugewandt ist, aufweist; wobei das mindestens eine strukturelle Merkmal (124) ein abgeschrägter Abschnitt (124) an der zweiten Klinge (120) ist und sich der abgeschrägte Abschnitt (124) von der zweiten Klinge (120) in Richtung der ersten Klinge (104) erstreckt, wobei der abgeschrägte Abschnitt (124) an dem zweiten Vorderabschnitt (122) angeordnet ist,
wobei die erste Klinge (104) an einem ersten Hebel (132) und die zweite Klinge (120) an einem zweiten Hebel (118) angebracht ist;
**dadurch gekennzeichnet, dass:**
das strukturelle Merkmal (124) und das stumpfe Profil (128) des zweiten Hebels (118) so ausgebildet sind, dass sie zusammenwirkend einen festen Abstand zwischen dem ersten vorderen Abschnitt, dem zweiten vorderen Abschnitt (106), (122) und dem ersten hinteren Abschnitt, dem zweiten hinteren Abschnitt (108), (126) von entsprechenden des ersten Hebels (102) und des zweiten Hebels (118) aufrechterhalten, so dass die vordere Schneidkante (114) und die hintere Schneidkante (130) den zweiten Hebel (118) nicht berühren.

2. Ein Schneidwerkzeug (100), das Folgendes umfasst:
eine erste Klinge (104), die einen ersten vorderen Abschnitt (106) und einen ersten hinteren Abschnitt (108) definiert,
wobei der erste vordere Abschnitt (106) eine vordere Schneidkante (114) definiert und der erste hintere Abschnitt (108) eine hintere Schneidkante (130) definiert;
eine zweite Klinge (120), die schwenkbar mit der ersten Klinge (104) in der Nähe des ersten hinteren Abschnitts (108) verbunden ist,
wobei die zweite Klinge (120) einen zweiten vorderen Abschnitt (122) und einen zweiten hinteren Abschnitt (126) definiert;
und die erste Klinge (104) ein strukturelles Merkmal (124) definiert, das die erste Klinge (104) und die zweite Klinge (120) in einer Bypass-Konfiguration relativ zueinander ermöglicht; wobei die zweite Klinge (120) ein stumpfes Profil (128) zwischen dem zweiten vorderen Abschnitt (122) und dem zweiten hinteren Abschnitt (126), der der hinteren Schneidkante (130) zugewandt ist, aufweist; wobei die erste Klinge (104) an einem ersten Hebel (132) und die zweite Klinge (120) an einem zweiten Hebel (118) angebracht ist;
**dadurch gekennzeichnet, dass**:
das strukturelle Merkmal (124) ein Zwischenabschnitt (112) ist, der auf der ersten Klinge (104) zwischen dem ersten hinteren Abschnitt (108) und dem ersten vorderen Abschnitt (106) definiert ist;
wobei der auf der ersten Klinge (104) definierte Zwischenabschnitt (112) so ausgebildet ist, dass er einen festen Abstand zwischen dem ersten Hebel (102) und dem zweiten Hebel (118) ermöglicht.

3. Das Schneidwerkzeug (100) nach Anspruch 1 oder 2, wobei sich der erste Hebel (102) in distaler Richtung von einem Drehpunkt (116) weg erstreckt, um einen ersten Griff (132) zu bilden, wobei der Drehpunkt (116) die zweite Klinge (120) schwenkbar mit der ersten Klinge (104) koppelt.

4. Das Schneidwerkzeug (100) nach Anspruch 3, wobei sich der zweite Hebel (118) in distaler Richtung vom Drehpunkt (116) weg erstreckt, um einen zweiten Griff (136) zu bilden.

5. Das Schneidwerkzeug (100) nach Anspruch 3, wobei der erste Griff (132) zumindest teilweise von einem ersten Handgriff (134) umgeben ist, der sich in Umfangsrichtung um den ersten Griff (132) herum erstreckt.

6. Das Schneidwerkzeug (100) nach Anspruch 4, wobei der zweite Griff (136) zumindest teilweise von einem zweiten Handgriff (138) umgeben ist, der sich in Umfangsrichtung um den zweiten Griff (136) herum erstreckt.

7. Das Schneidwerkzeug (100) nach einem der vorhergehenden Ansprüche, wobei der erste Hebel (102) und der zweite Hebel (118) aus Aluminium hergestellt sind.

8. Das Schneidewerkzeug (100) nach einem der vorhergehenden Ansprüche, wobei das Schneidewerkzeug (100) eines der folgenden ist: Astschere und Gartenschere.

## Revendications

1. Outil de coupe (100) comprenant :
une première lame (104) définissant une première section avant (106) et une première section arrière (108), dans laquelle la première section avant (106) définit un bord de coupe avant (114) et la première section arrière (108) définit un bord de coupe arrière (130) ;
une seconde lame (120) couplée de manière pivotante à la première lame (104) à proximité de la première section arrière (108), dans laquelle la seconde lame (120) définit une seconde section avant (122) et une seconde section arrière (126) ; et
la seconde lame (120) définit une caractéristique structurelle (124) qui permet à la première lame (104) et à la seconde lame (120) d'être dans une configuration de dérivation l'une par rapport à l'autre ;
dans lequel la seconde lame (120) a un profil émoussé (128) entre la seconde section avant (122) et la seconde section arrière (126) faisant face au bord de coupe arrière (130) ;
dans lequel l'au moins une caractéristique structurelle (124) est une partie inclinée (124) sur la seconde lame (120) et la partie inclinée (124) s'étend de la seconde lame (120) vers la première lame (104), la partie inclinée (124) étant disposée sur la seconde section avant (122),
dans lequel la première lame (104) est définie sur un premier levier (102) et la seconde lame (120) est définie sur un second levier (118) ;
**caractérisé en ce que** :
la caractéristique structurelle (124) et le profil émoussé (128) du second levier (118) sont configurés pour maintenir de manière coopérative une distance fixe entre la première section avant, la seconde section avant (106), (122) et la première section arrière, la seconde section arrière (108), (126) par rapport aux leviers correspondants du premier levier (102) et du second levier (118) de telle sorte que le bord de coupe avant (114) et le bord de coupe arrière (130) ne soient pas en contact avec le second levier (118).

2. Outil de coupe (100) comprenant :
une première lame (104) définissant une première section avant (106) et une première section arrière (108),
dans lequel la première section avant (106) définit un bord de coupe avant (114) et la première section arrière (108) définit un bord de coupe arrière (130) ;
une seconde lame (120) couplée de manière pivotante à la première lame (104) à proximité de la première section arrière (108),
dans lequel la seconde lame (120) définit une seconde section avant (122) et une seconde section arrière (126) ; et
la première lame (104) définit une caractéristique structurelle (124) qui permet à la première lame (104) et à la seconde lame (120) dans une configuration de dérivation l'une par rapport à l'autre ;
dans lequel la seconde lame (120) a un profil émoussé (128) entre la seconde section avant (122) et la seconde section arrière (126) faisant face au bord de coupe arrière (130) ; dans lequel la première lame (104) est définie sur un premier levier (102) et la seconde lame (120) est définie sur un second levier (118) ;
**caractérisé en ce que** :
la caractéristique structurelle (124) est une section intermédiaire (112) définie sur la première lame (104) entre la première section arrière (108) et la première section avant (106) ;
dans lequel la section intermédiaire (112) définie sur la première lame (104) est configurée pour permettre une distance fixe entre le premier levier (102) et le second levier (118).

3. Outil de coupe (100) selon la revendication 1 ou 2, dans lequel le premier levier (102) s'étend de manière distale à l'écart d'un point de pivot (116) pour définir une première poignée (132), où le point de pivot (116) couple de manière pivotante la seconde lame (120) à la première lame (104).

4. Outil de coupe (100) selon la revendication 3, dans lequel le second levier (118) s'étend de manière distale à l'écart du point de pivot (116) pour définir une seconde poignée (136).

5. Outil de coupe (100) selon la revendication 3, dans lequel la première poignée (132) est entourée, au moins partiellement, d'une première poignée (134) s'étendant circonférentiellement autour de la première poignée (132).

6. Outil de coupe (100) selon la revendication 4, dans lequel la seconde poignée (136) est entourée, au moins partiellement, d'une seconde poignée (138) s'étendant circonférentiellement autour de la seconde poignée (136).

7. Outil de coupe (100) selon l'une quelconque des revendications précédentes, dans lequel le premier levier (102) et le second levier (118) sont réalisés en aluminium.

8. Outil de coupe (100) selon l'une quelconque des revendications précédentes, dans lequel l'outil de coupe (100) est l'un des éléments suivants : des élagueurs et des sécateurs.
